# NEUE EUROPÄISCHE PATENTSCHRIFT

(11) **EP 0 279 441 B2**
(45) Veröffentlichungstag und Bekanntmachung des Hinweises auf die Entscheidung über den Einspruch: **22.10.1997**
(45) Hinweis auf die Patenterteilung: 09.10.1991
(21) Anmeldenummer: 88102353.5
(22) Anmeldetag: 18.02.1988
(51) Int. Cl.: C09D 133/14

(54) **Wässrige Zweikomponentenlacke zur einschichtigen Beschichtung von hochresistenten Finish-Folien und Endloskanten**
Aqueous two-component laquers for the single-layer coating of highly resistant finish foils and continuous-edge foils
Vernis aqueux à deux composants pour recouvrement en une seule couche de feuilles de finition hautement résistantes et de bandes sans fin

(30) Priorität: 19.02.1987 DE 3705255
(43) Veröffentlichungstag der Anmeldung: 24.08.1988
(73) Patentinhaber: BASF Lacke + Farben AG, 48165 Münster-Hiltrup (DE)
(72) Erfinder: Dickerhof, Karlheinz, Dr., D-4406 Drensteinfurt (DE)
(74) Vertreter: Münch, Volker, Dr.

(56) Entgegenhaltungen:
- DE-A- 2 644 120
- JP-A-51 036 235
- Thermosetting Acrylic Emulsions; Paint a. Resin, 1983, vol. 53, Nr. 6, S. 34-37, 49
- J. Koral et al, Journal of Paint Technology, vol. 38, 1966, S. 610-614
- P. Böhme "Dekorfolien", VEB Fachbuchverlag, Leipzig, 1986, S. 44-47
- Römpps Chemie-Lexikon 1977, S. 3677
- Firmenbroschüre Firma Perstorp AB, Schweden, 01.05.75, "Polyalcohols (Pentaerythritol, Trimethylolpropane)"

## Beschreibung

Die Erfindung betrifft wäßrige, übliche Additive und ggf. Pigmente enthaltende Zweikomponentenlacke zur überwiegend einschichtigen Beschichtung von hochresistenten Finish-Folien und Endloskanten.

Zur Zeit besteht eine große Lücke in der Oberflächengüte zwischen den für die Beschichtung von Spanplatten oder anderen aus Cellulosefaserprodukten bestehenden Platten verwendeten Schichtstoffplatten (Laminaten) und den Finish-Folien.

Imprägnierte Papiere, die auf Platten verpreßt eine Vorbearbeitung im Sinne einer Grundierung darstellen (Grundierfolie) oder häufig auch eine dekorative Wirkung entfalten (Dekorfolie), sind in der Möbel- und Plattenindustrie seit langem bewährt. Die Verknappung und Verteuerung echter Furniere hat zu einem verstärkten Einsatz letzterer Folien ganz wesentlich beigetragen. Die Folien müssen nach dem Verpressen auf Span- oder Holzfaserhartplatten nachlackiert werden, da sonst der Oberflächeneffekt nicht ausreichend ist.

Im Zuge der Vereinfachung des Produktionsablaufs setzt sich eine verbesserte Art imprägnierter Papiere, die Fertigfolie, mehr und mehr durch. Hierbei handelt es sich um imprägnierte unifarbige oder bedruckte Papierfolien, die im Anschluß an die Imprägnierung schon beim Folienhersteller mit einem Lackanstrich versehen werden.

Die so erhaltenen Finish-Folien und Endloskanten (zur kontinuierlichen Kantenbeschichtung) werden als Rollenware an die Möbel- und Plattenindustrie geliefert, wo sie unter Druck- und Hitzeeinwirkung mit Substraten, wie z.B. Span- oder Hartfaserplatten, verleimt werden. Auf diese Weise werden Flächen erhalten, die in der Regel keiner weiteren Lackierung mehr bedürfen, also "preßfallend" weiterverarbeitet werden können.

Die zur Lackierung der in Rede stehenden Finish-Folien bzw. Endloskanten verwendeten Lacke und die aus den Lacken hergestellten Beschichtungen müssen hohen Anforderungen gerecht werden.

So sollen sowohl bei der Beschichtung von Finish-Folien und Endloskanten als auch bei der Weiterverarbeitung der beschichteten Folien bzw. Kanten keine oder nur geringe Mengen an organischen Lösungsmitteln und/oder Formaldehyd emittiert werden.

Außerdem ist es wünschenswert, daß sich die lackierten, aber noch nicht verpreßten Folien nicht krümmen oder gar einrollen.

Besonders wichtig ist es, daß die zur Beschichtung der Finish-Folien und Endloskanten verwendeten Lacke nach einer unter 60 Sekunden, in der Regel 10 bis 20 Sekunden dauernden Wärmebehandlung bei 140 bis 210 °C so weit ausgehärtet sind, daß sie die bei der Herstellung der Platten bzw. Möbelteile angewandten Preßbedingungen (z.B. 5 bis 30 Sekunden bei 150 bis 180 °C und 5 bis 20 kp/cm²; verschärfte Preßbedingungen: bis 180 Sekunden bei 170 bis 180 °C und bis zu 30 kp/cm² ohne Blockeigenschaften und Verfärbungen zu zeigen unbeschadet überstehen. Die so erhaltenen Oberflächen sollen eine möglichst hohe Kratzfestigkeit aufweisen und die in der DIN 68861 Gruppe A geforderten Resistenzwerte möglichst erreichen.

In Gruppe A der DIN 68861 werden folgende Anforderungen an die zu prüfenden Oberflächen gestellt:

| Prüfmittel | Ewd | Erg |
|---|---|---|
| 1 Essigsäure | 16 h | 0 |
| 2 Zitronensäure | 16 h | 0 |
| 3 Natriumcarbonat | 16 h | 0 |
| 4 Ammoniakwasser | 16 h | 0 |
| 5 Äthylalkohol | 16 h | 0 |
| 6 Weißwein, Rotwein, Südwein | 16 h | 0 |
| 7 Bier | 16 h | 0 |
| 8 Cola-Getränke | 16 h | 0 |
| 9 Pulverkaffee | 16 h | 0 |
| 10 Schwarzer Tee | 16 h | 0 |
| 11 Schwarzer Johannisbeersaft | 16 h | 0 |
| 12 Kondensmilch | 16 h | 0 |
| 13 Wasser | 16 h | 0 |
| 14 Benzin | 16 h | 0 |
| 15 Aceton | 16 h | 0 |
| 16 Äthyl-Butylacetat | 16 h | 0 |
| 17 Butter | 16 h | 0 |
| 18 Olivenöl | 16 h | 0 |
| 19 Senf | 16 h | 0 |
| 20 Kochsalz | 16 h | 0 |
| 21 Zwiebel | 16 h | 0 |
| 22 Lippenstift | 16 h | 0 |
| 23 Desinfektionsmittel | 16 h | 0 |
| 24 Schwarze Kugelschreiber-Pastentinte | 16 h | 0 |
| 25 Stempelfarbe | 16 h | 0 |
| 26 Reinigungsmittel | 16 h | 0 |
| 27 Reinigungslösung | 16 h | 0 |
| Ewd = Einwirkdauer des Prüfmittels Erg = Ergebnis | | |

### Beschreibung der Ergebnisse

Aus der vergleichenden Betrachtung der geprüften und ungeprüften Fläche ist das Ergebnis der Prüfung nach folgender Bewertungsskala anzugeben:
0 Keine sichtbaren Veränderungen
1 Eben erkennbare Änderungen in Glanz oder Farbe
2 Leichte Veränderungen in Glanz oder Farbe; die Struktur der Prüffläche ist nicht verändert
3 Starke Markierungen sichtbar; die Struktur der Prüffläche ist jedoch weitgehend unbeschädigt
4 Starke Markierungen sichtbar; die Struktur der Prüffläche ist verändert
5 Pruffläche stark verändert bzw. zerstört.

Ein Test, der insbesondere durchgeführt wird, um zu testen, ob auch die speziellen Anforderungen des skandinavischen und des amerikanischen Marktes erfüllt werden, ist der sogenannte Quelltest bzw. Wassertest. Dieser wird derart durchgeführt, daß eine Wassersäule von ca. 100 cm³ 24 Stunden lang auf die lackierte Oberfläche einwirkt, ohne daß eine Quellung erkennbar sein darf. Auch bei Einwirkung von Pulverkaffee und Senf über 24 Stunden dürfen keine Markierungen zurückbleiben.

Die erwähnten Forderungen nach einer geringen Lösungsmittelemission kann nur von wäßrigen Lacksystemen erfüllt werden.

Zur Herstellung von Oberflächen, die eine hohe Kratzfestigkeit aufweisen und die die in der DIN 68861 Gruppe A geforderten Resistenzwerte möglichst erreichen, wurden bisher Lacke verwendet, die entweder Melamin- und/oder Harnstoffharze oder Polyacrylate als Hauptbindemittel enthalten.

Die Lacke auf Basis von Melamin- und/oder Harnstoffharzen werden nachteiligerweise von Wasser und wäßrigen Lösungen leicht angequollen, und sie zeigen sowohl bei der Verarbeitung als auch danach eine relativ hohe Formaldehydemission, und die mit diesen Lacken lackierten Folien zeigen ein starkes Krümmen bzw. Einrollverhalten.

Die bisher bekannten Lacke auf Basis von Polyacrylaten zeigen schlechte Kratzfestigkeit und schlechte Lösungsmittelbeständigkeiten (insbesondere gegen Aceton).

Bekannte wäßrige Lacksysteme, die aus Kombinationen von Melamin- und/oder Harnstoffharzen mit Polyacrylaten bestehen, haben entweder einen niedrigen Festkörper, eine zu hohe Formaldehydemission (größer 0,1 ppm) oder nicht ausreichende Oberflächenresistenzen gegenüber mechanischen oder chemischen Angriffen.

Der voliergenden Erfindung liegt die Aufgabe zugrunde, neue wäßrige lösungsmittelarme bzw. lösungsmittelfreie und formaldehydarme Lacke zur überwiegend einschichtigen Beschichtung von hochresistenten Finish-Folien und Endloskanten zur Verfügung zu stellen. Unter formaldehydarmen Lacken sind Lacke zu verstehen, die nach der Beschichtung auf einer Folie bzw. Kante und nach der Verleimung auf einer Spanplatte die Emissionsklasse E 1 erfüllen, also 0,1 ppm oder weniger Formaldehyd abspalten. Die Herstellung der Prüfkörper und die Durchführung der Messung sind in der DIN 52 368 beschrieben. Die neuen Lacke sollen nach einer Wärmebehandlung bei 140 bis 210 °C spätestens nach 60 Sekunden, in der Regel nach 10 bis 20 Sekunden, so weit ausgehärtet sein, daß sie die bei der Herstellung der Platten bzw. Möbelteile angewandten Preßbedingungen - insbesondere die in steigendem Maße angewandten verschäften Preßbedingungen - ohne Blockeigenschaften und Verfärbungen zu zeigen unbeschadet überstehen. Die so erhaltenen Oberflächen sollen eine möglichst hohe Kratzfestigkeit aufweisen. Die in der DIN 68 861 Gruppe A geforderten Resistenzwerte sollten möglichst weitgehend erreicht werden, und der zuvor beschriebene Quelltest sollte erfüllt sein.

Die neuen Lacke sollen weiterhin sowohl während der Beschichtung der Folien bzw. Endloskanten als auch bei der Weiterverarbeitung der beschichteten Folien bzw. Endloskanten möglichst wenig Formaldehyd emittieren.

Schließlich sollen die neuen Lacke nach der Applikation kein Krümmen oder gar Einrollen der Folien verursachen.

In "Thermosetting Acrylic Emulsion" (Talak, Pontis, Paint & Resin 1983, Vol. 53, Nr. 6, 34 ff) (1) werden unpigmentierte einkomponentige Überzugszusammensetzungen beschrieben, die im wesentlichen aus wäßrigen Emulsionen carboxyl-, hydroxyl- und methylolamidgruppenhaltiger Polyacrylate, Hexamethoxymethylmelamin, dem Ammoniumsalz der p-Toluolsulfonsäure als geblocktem Härtungskatalysator und Butylcellusolve bestehen.

Die in (1) offenbarten wäßrigen Beschichtungszusammensetzungen sollen für eine ganze Reihe von Anwendungsgebieten - unter anderem auch zum Beschichten von Papier - geeignet sein. Versuche, die in (1) offenbarten Beschichtungszusammensetzungen unter den oben beschriebenen Bedingungen zur Beschichtung von Finish-Folien und Endloskanten einzusetzen, führten nur zu unbefriedigenden Resultaten.

Nach dem Verpressen der mit den in (1) offenbarten Lacken lackierten Folien wurden Oberflächen erhalten, die vor allem bei der Prüfung mit Rotwein, Pulverkaffee und schwarzem Tee sehr schlechte Ergebnisse erzielten (vgl. auch Ausführungen zur DIN 68861 Gruppe A).

In der DE-OS 21 35 072 wird ein Verfahren zur Herstellung hochglänzender Oberflächen von Dekorpapieren empfohlen, bei dem man ein Dekorrohpapier mit einer füllstofffreien Mischung aus einer thermoplastischen und einer selbstvernetzenden, wäßrigen Dispersion auf Acrylatbasis, die auch ein wasserlösliches Melamin-Formaldehyd- oder Harnstoff-Formaldehydharz enthalten kann, tränkt oder beschichtet, anschließend trocknet und mit einer hochglanzpolierten Walze bei einer Temperatur zwischen 120 und 180 ° C kalandriert.

Versuche, die in der DE-OS 21 35 072 offenbarten Beschichtungszusammensetzungen unter den obigen Bedingungen zur Beschichtung von Finish-Folien und Endloskanten zu verwenden, führten nur zu unbefriedigenden Resultaten: Die erhaltenen Oberflächen zeigen schlechte Kratzeigenschaften und bleiben beim Verpressen am Preßblech bzw. Mylarband haften.

Die der vorliegenden Erfindung zugrundeliegende Aufgabe konnte überraschenderweise durch Bereitstellung von Zweikomponentenlacken der eingangs genannten Art gelöst werden, die dadurch gekennzeichnet sind, daß sie als Lackkomponente (I)
A) 40 bis 85 Gew.-%, vorzugsweise 60 bis 85 Gew.-% einer wäßrigen Dispersion eines selbstvernetzenden Polyacrylatharzes, wobei dieses als die die Selbstvernetzung ermöglichenden Gruppen Säureamidderivatgruppen enthält, die der allgemeinen Strukturformel -CO-N(R¹)-CH(R²)-OR³ entsprechen, wobei
   - R¹ =: H-Atom oder eine -CH(R²)-OR³-Gruppierung,
   - R² =: H-Atom oder eine -COOR⁴-Gruppe,
   - R³ =: H-Atom oder ein 1 bis 10 C-Atome enthaltender Kohlenwasserstoffrest, bevorzugt Methyl-, Ethyl-, (iso)Propyl- oder (iso)Butylrest,
   - R⁴ =: Alkylrest mit 1 bis 5 C-Atomen,
B) 5 bis 50 Gew.-%, vorzugsweise 7 bis 20 Gew.-%, eines in einem wäßrigen Medium dispergierten oder gelösten Melaminharzes,
C) 0 bis 40 Gew.-%, vorzugsweise 5 bis 20 Gew.-%, eines in einem wäßrigen Medium dispergierten oder gelösten Harnstoffharzes,
D) 5 bis 30 Gew.-%, vorzugsweise 6 bis 15 Gew.-%, einer Polyolkomponente sowie
E) 0,01 bis 5 Gew.-%, vorzugsweise 0,1 bis 1,5 Gew.-%, einer Aminkomponente enthalten, wobei die Summe von A) bis E) 100 Gew.-% beträgt, die Härterkomponente (II) aus einer wasserverdünnbaren Säure besteht und die Komponenten (I) und (II) vor der Applikation in einem solchen Verhältnis gemischt werden, daß auf 100 Gewichtsteile der Lackkomponente (1) 0,05 bis 3 Gewichtsteile, vorzugsweise 0,5 bis 2 Gewichtsteile, der reinen Härterkomponente (II) kommen.

Die Reaktionspartner A), B), C) und D) werden dabei in einem solchen Verhältnis, bezogen auf den Festkörper, gemischt, daß auf 1 Gewichtsteil des selbstvernetzenden Polyacrylatharzes (A) 0,1 bis 0,7, bevorzugt 0,2 bis 0,5 Gewichtsteile des Melaminharzes (B), 0 bis 0,7, bevorzugt 0,01 bis 0,4 Gewichtsteile des Harnstoffharzes (C) und 0,01 bis 0,7, bevorzugt 0,01 bis 0,4 Gewichtsteile der Polyolkomponente (D) kommen.

Als wasserverdünnbare Säuren kommen Phosphorsäure, Maleinsäure, Salzsäure, para-Toluolsulfonsäure und ihre Derivate sowie Naphthalinsulfonsäure und deren Derivate zum Einsatz. Bevorzugt wird para-Toluolsulfonsäure eingesetzt, z.B. als 50 %ige wäßrige Lösung.

Unter einem wäßrigen Lack ist ein Lack zu verstehen, dessen flüssige Verdünnungsmittel mindestens zu 95 Gew.-%, bevorzugt zu 98 bis 100 Gew.-%, bezogen auf die Summe aller flüssigen Verdünnungsmittel, aus Wasser bestehen. Daneben kann der Lack auch noch organische Lösungsmittel, wie z.B. heterocyclische oder aliphatische Kohlenwasserstoffe, ein- oder mehrwertige Alkohole, Ether, Ester und Ketone, wie z.B. N-Methylpyrrolidon, Butanol, Isopropanol, Ethanol, Ethyl- und Butylglykol sowie deren Acetate, Butyldiglykol, Ethylenglykoldibutylether, Ethylenglykoldiethylether, Diethylenglykoldimethylether, Cyclohexanon, Methylethylketon, Aceton, Isophoron, Propylenglykol oder Mischungen davon enthalten.

Als Beispiele für übliche Additive, die in den Komponenten der erfindungsgemäßen Lacke enthalten sein können, seien beispielhaft genannt: Mattierungsmittel (Kieselsäurederivate, Wachse ...), Verlaufs- und Benetzungsmittel (Natriumsalze von Polyacrylaten ...), Emulgatoren (ethoxylierte Alkylphenole, ethoxylierte Fettsäuren ...), Entschäumer, Weichmacher (ethoxyliertes Glycerin ...), Wachse, Thixotropierungsmittel (Polyacrylate, Polyurethane, Cellulosederivate ...) und Filmbildehilfsmittel (Phosphorsäureester, Glykole ...).

Die erfindungsgemäßen Lacke sind Zweikomponentensysteme, die aus der Lackkomponente (I) und der Härterkomponente (II) bestehen. Getrennt sind die beiden Komponenten länger als 6 Monate lagerstabil.

Entscheidend für die Lagerstabilität der Komponente (I) sind der pH-Wert und das Mischungsverhältnis der Reaktionspartner untereinander. Der pH-Wert sollte über 7 liegen.

Vor der Applikation werden die beiden Komponenten (I) und (II) gemischt, und die Topfzeit des erhaltenen Gemisches bei Raumtemperatur hängt entscheidend vom pH-Wert und dem Verhältnis der Reaktionspartner ab.

Die Arbeitsweise bei den Folienherstellern erfordert es, daß die Topfzeiten der aus den Komponenten (I) und (II) bestehenden Gemische über 24 Stunden liegen.

Gute Beschichtungsergebnisse und ausreichende Topfzeiten, worunter Topfzeiten bei Raumtemperatur von 1 Tag bis mehreren Wochen zu verstehen sind, können erreicht werden, wenn die einzelnen Komponenten in einem solchen Verhältnis umgesetzt werden, daß auf 1 Gewichtsteil selbstvernetzendes Polyacrylatharz (A) 0,1 bis 0,7, bevorzugt 0,2 bis 0,5 Gewichtsteile des Melaminharzes (B), 0 bis 0,7, bevorzugt 0 bis 0,4 Gewichtsteile des Harnstoffharzes (C) und 0,01 bis 0,7, bevorzugt 0,01 bis 0,4 Gewichtsteile der Polyolkomponente (D) kommen.

Sobald das Gemisch aus der Lackkomponente (I) und der Härterkomponente (II) appliziert worden ist und auf eine Temperatur von 140 bis 210 ° C gebracht worden ist, härtet es innerhalb von 10 bis 55 Sekunden, in der Regel innerhalb von 10 bis 20 Sekunden, ohne Blasenbildung so weit aus, daß die dabei entstandenen Lackflächen die weiteren Verfahrensschritte - insbesondere die in steigendem Maße angewandten verschärften Preßbedingungen - ohne Blockeigenschaften oder Verfärbungen zu zeigen schadlos überstehen.

Ein Vorteil der erfindungsgemäßen Lacksysteme liegt darin, daß sie auch nach Anwendung von verschärften Preßbedingungen noch Oberflächen mit guten Eigenschaften liefern.

So zeigen die mit den erfindungsgemäßen Lacksystemen hergestellten Oberflächen insbesondere hohe Kratzfestigkeitswerte, gute Lösungsmittelresistenz (insbesondere gute Resistenzwerte gegenüber Aceton) und sehr geringe Formaldehydemissionswerte (kleiner 0,1 ppm nach der DIN 52 368; entspricht< 3,5 mg/hm²).

Weiterhin erfüllen die mit den erfindungsgemäßen Lacken hergestellten Beschichtungen nahezu alle der in der oben aufgeführten Gruppe A der DIN 68861 aufgestellten Forderungen. Besonders sei hervorgehoben, daß die mit den erfindungsgemäßen Lacken hergestellten Oberflächen absolut kein Quellverhalten zeigen und daß sie eine besonders gute Resistenz gegenüber Pulverkaffee und Senf aufweisen. Die erfindungsgemäßen Lacke erfüllen damit die Anforderungen, die insbesondere auf dem skandinavischen und dem amerikanischen Markt zu erfüllen sind.

Die Lackkomponente (I) enthält 0,01 bis 5 Gew.-%, vorzugsweise 0,1 bis 1,5 Gew.-%, einer Aminkomponente. Der Aminzusatz gewährleistet nicht nur die Lagerstabilität der Melaminharze mit den selbstvernetzenden Polyacrylaten, sondern neutralisiert einen Teil der als Katalysatorkomponente (II) hinzugefügten wasserverdünnbaren Säure. Dadurch werden auch die Dauer der Verarbeitbarkeit (potlife) der Produkte und die Aushärtung gesteuert.

Als Aminkomponente (E) können Ammoniak, Triethylamin, Dimethyl- oder Diethylaminoethanol, 2-Amino-2-methylpropanol, 2-Dimethylamino-2-methylpropanol, 2-Amino-2-ethylpropandiol-1,3 oder 2-Amino-2-hydroxymethylpropandiol-1,3 eingesetzt werden.

Überraschenderweise können besonders vergilbungsbeständige Oberflächen mit besonders guten Resistenzwerten erhalten werden, wenn als Aminkomponente 2-Amino-2-ethylpropandiol-1,3 und/oder 2-Amino-2-methylpropanol verwendet werden.

Als selbstvernetzende wäßrige Polyacrylatdispersion (A) werden wäßrige Dispersionen selbstvernetzen-der Polyacrylatharze verwendet, die als die die Selbstvernetzung ermöglichenden Gruppen Säureamidderivatgruppen enthält, die der allgemeinen Strukturformel -CO-N(R¹)-CH(R²)-OR³ entsprechen, wobei
- R¹ =: H-Atom oder eine -CH(R²)-OR³-Gruppierung,
- R² =: H-Atom oder eine -COOR⁴Gruppe,
- R³ =: H-Atom oder ein 1 bis 10 C-Atome enthaltender Kohlenwasserstoffrest, bevorzugt Methyl-, Ethyl-, (iso-)Propyl- oder (iso-)Butylrest,
- R⁴ =: Alkylrest mit 1 bis 5 C-Atomen
bedeuten.

Die -CO-N(R¹)-CH(R²)-OR³-Gruppen können sowohl über ein einpolymerisiertes Monomer als auch über eine polymeranaloge Umsetzung in die Polyacrylatmoleküle eingeführt worden sein. Bevorzugt werden die -CO-N(R¹)-CH(R²)-OR³-Gruppen, in denen R¹ und R² Wasserstoffatome und R³ ein Wasserstoffatom oder ein Alkylrest mit 1 bis 4 C-Atomen, bevorzugt Methyl-, Ethyl-, (iso-)Propyl- oder (iso-)Butyl bedeuten.

Die selbstvernetzbaren Polyacrylatharze können neben den oben beschriebenen Säureamidderivatgruppen auch Carboxylgruppen enthalten. Der Carboxylgruppengehalt des selbstvernetzenden Polyacrylatharzes darf jedoch nicht so hoch sein, daß das Polyacrylatharz bei der Neutralisation mit der Aminkomponente in Lösung geht.

Der Fachmann kann mit Hilfe einiger weniger orientierender Versuche feststellen, welcher Carboxylgruppengehalt er für seine jeweils vorliegende Problemstellung zu wählen hat.

Das erfindungsgemäß einzusetzende Polyacrylatharz kann neben den Säureamidderivat- und Carboxylgruppen auch noch weitere funktionelle Gruppen, wie z.B. Hydroxylgruppen oder freie Amidgruppen, enthalten.

Die erfindungsgemäß einsetzbaren wäßrigen Dispersionen können nach allgemein bekannten Methoden durch Copolymerisation von (Meth-)acrylsäureestern, bevorzugt Methyl-, Ethyl-, Propyl- oder Butyl(meth)acrylaten, den entsprechenden (Meth-)acrylsäureamidderivaten und ggf. einer entsprechenden Menge an Carboxylgruppen tragenden, eine polymerisierbare Doppelbindung enthaltenden Monomeren, z.B. Fumar- oder Maleinsäure, bevorzugt (Meth-)acrylsäure unter eventueller Mitverwendung geringerer Mengen weiterer Monomere, wie z.B. Vinylacetat, Hydroxyalkyl-(meth-)acrylaten, Styrol, (Meth-)acrylsäureamiden usw., hergestellt werden.

Bevorzugt werden Dispersionen mit folgenden Kenndaten eingesetzt:
- Festkörper: 40 bis 60 Gew.-%, vorzugsweise 40 bis 50 Gew.-%, bezogen auf das Gesamtgewicht der wäßrigen Polyacrylatdispersion.
- Mittlerer Teilchendurchmesser: 0,1 bis 0,5 µm, vorzugsweise 0,1 bis 0,3 µm.
- Minimale Filmbildungstemperatur (MFT): 0 bis 70 ° C, vorzugsweise zwischen 20 und 60 ° C.
- Viskosität: 200 bis 5.000 mPas, vorzugsweise 200 bis 1.000 mPas und
- pH-Wert: 2 bis 10, vorzugsweise größer 7.

Bei den wasserverdünnbaren Melaminharzen (B) handelt es sich um allgemein bekannte, in der Regel veretherte Melamin-Formaldehyd-Umsetzungsprodukte. Die Wasserverdünnbarkeit der Melaminharze hängt, abgesehen vom Kondensationsgrad, der möglichst niedrig sein sollte, von der Veretherungskomponente ab, wobei nur die niedrigsten Glieder der Alkanolreihe wasserlösliche Kondensate ergeben. Die größte Bedeutung haben die Hexamethoxymethylmelaminharze. Bei Verwendung von Lösungsvermittlern können auch butanolveretherte Melaminharze in wäßriger Phase dispergiert werden.

Als Beispiele für erfindungsgemäß einsetzbare Melaminharze seien die im Handel unter dem Markennamen Cymel 300, 301, 303, Luwipal 068, 066, Beetle BE 3745 oder Maprenal MF 900, 904 und 910 erhältlichen, nicht plastifizierten Hexamethoxymethylmelaminharze genannt.

Bei den Harnstoffharzen handelt es sich um allgemein bekannte wasserverdünnbare Harnstoff-Formaldehyd-Umsetzungsprodukte.

Als Beispiele für erfindungsgemäß einsetzbare Harnstoffharze seien die im Handel unter dem Markennamen Dynomin UM 15, Resamin VHW 3525 oder Plastopal erhältlichen plastifizierten bzw. nicht plastifizierten Harnstoff-Formaldehyd-Umsetzungsprodukte genannt.
Als Polyolkomponente (D) kommen tri- und höherfunktionelle Alkohole, wie z.B. Trimethylolpropan, Ditrimethylolpropan, Pentaerythrit, Dipentaerythrit, Trimethylolethan, Glycerin, Triethanolamin, Mischpolymerisate aus Polyethylen- und Polypropylenoxid bis zum Molekulargewicht 7.000, wobei diese wasserverdünnbar sein müssen, eth- und/oder propoxylierte Derivate von Trimethylolpropan u.a., Trishydroxyethylisocyanurat sowie hydroxylgruppenhaltige Polyester, bestehend aus niedermolekularen Kondensationsprodukten aus Adipinsäure, Maleinsäure, Phthalsäure, Isophthalsäure mit Diethylenglykol, Triethylenglykol, Trimethylolpropan, Butandiol, Pentandiol u.a. in Frage.

Besonders gute Ergebnisse werden erzielt, wenn trifunktionelle Polyole eingesetzt werden. Bei der Verwendung von Diolen werden Beschichtungen mit weniger guten Eigenschaften erhalten.

Die erfindungsgemäßen Lacksysteme sind auch zur Lackierung von Holzsubstraten, wie z.B. Hartfaserplatten, Spanplatten und Holzwerkstoffen, geeignet. In vielen Fällen kann es vorteilhaft sein, mit einem Primer vorzulackieren. Wenn besonders saugfähige Substrate beschichtet werden sollen, wird entweder ein separater Primer, z.B. auf Dispersionsbasis, vorgelegt oder mit dem gleichen Lackmaterial zweimal lackiert.

Die Erfindung betrifft auch ein Verfahren zur einschichtigen Beschichtung von Finish-Folien und Endloskanten, bei dem die Finish-Folien bzw. Endloskanten mit einem wäßrigen, übliche Additive und ggf. Pigmente enthaltenden Zweikomponentenlack beschichtet werden und der Naßfilm anschließend 10 bis 60, vorzugsweise 10 bis 20 Sekunden lang, bei 140 bis 210 ° C ausgehärtet wird und das dadurch gekennzeichnet ist, daß der Zweikomponentenlack als Lackkomponente (I)
A) 40 bis 85 Gew.-%, vorzugsweise 60 bis 85 Gew.-%, einer wäßrigen Dispersion eines selbstvernetzenden Polyacrylatharzes, wobei dieses als die die Selbstvernetzung ermöglichenden Gruppen Säureamidderivatgruppen enthält, die der allgemeinen Strukturformel -CO-N(R¹)-CH(R²)-OR³ entsprechen, wobei
   - R¹ =: H-Atom oder eine -CH(R²)-OR³-Gruppierung,
   - R² =: H-Atom oder eine -COOR⁴-Gruppe,
   - R³ =: H-Atom oder ein 1 bis 10 C-Atome enthaltender Kohlenwasserstoffrest, bevorzugt Methyl-, Ethyl-, (iso-)Propyl- oder (iso-)Butylrest,
   - R⁴ =: Alkylrest mit 1 bis 5 C-Atomen,
B) 5 bis 50 Gew.-%, vorzugsweise 7 bis 20 Gew.-%, eines in einem wäßrigen Medium dispergierten oder gelösten Melaminharzes,
C) 0 bis 40 Gew.-%, vorzugsweise 5 bis 20 Gew.-%, eines in einem wäßrigen Medium dispergierten oder gelösten Harnstoffharzes,
D) 5 bis 30 Gew.-%, vorzugsweise 6 bis 15 Gew.-%, einer Polyolkomponente sowie
E) 0,01 bis 5 Gew.-%, vorzugsweise 0,1 bis 1,5 Gew.-%, einer Aminkomponente enthält und die Summe von A) bis E) 100 Gew.-% beträgt, die Härterkomponente (II) aus einer wassrverdünnbaren Säure besteht und die Komponenten (I) und (II) vor der Applikation in einem solchen Verhältnis gemischt werden, daß auf 100 Gewichtsteile der Lackkomponente (1) 0,05 bis 3 Gewichtsteile, vorzugsweise 0,5 bis 2 Gewichtsteile, der reinen Härterkomponente (II) kommen.

Bezüglich der Beschreibung der erfindungsgemäß einsetzbaren Komponenten A) bis E) und der bevorzugten Ausführungsformen verweisen wir auf das bereits oben Gesagte.

Die Reaktionspartner werden in einem solchen Verhältnis, fest auf fest berechnet, gemischt, daß auf 1 Gewichtsteil selbstvernetzendes Polyacrylatharz (A) 0,1 bis 0,7, bevorzugt 0,2 bis 0,5, Gewichtsteile Melaminharz (B), 0 bis 0,7, bevorzugt 0,01 bis 0,4, Gewichtsteile Harnstoffharz (C) und 0,01 bis 0,7, bevorzugt 0,01 bis 0,4, Gewichtsteile der Polyolkomponente kommen.

Die Finish-Folien und Endloskanten werden mit eigens dafür entwickelten Maschinen lackiert. Als Lackauftrags- bzw. -dosiereinrichtungen stehen Rasterwalzen oder Drahtrakeln zur Verfügung. Die Lackauftragsmenge liegt üblicherweise zwischen 5 und 50 g/m² bei einer Naßfilmschichtdicke von 10 bis 80 µm. Zur Lacktrocknung werden üblicherweise Trockenkanäle mit beheizter Luft, sogenannte Konvektoren oder IR-Strahler, oder Kombinationen aus beiden oder heiße Walzen (Kalander) eingesetzt. Die Papierbahn wird nach der Trocknung als Rolle aufgewickelt und in dieser Form in die Möbelindustrie geliefert.

Die vorstehend beschriebene Lackkomponente (I) läßt sich auch pigmentieren, wobei einerseits die verschiedenen Pigmente mit dem Bindemittel zusammen angemahlen werden oder die Komponente (I) als Auflackgut für eine wäßrige Pigmentpaste verwendet wird. Vorzugsweise wird Titandioxid als Pigment verwendet.

Oberflächen, die eine hohe Kratzfestigkeit und einen möglichst geringen Metallabrieb aufweisen und die die in der DIN 68861 Gruppe A geforderten Resistenzwerte erreichen und keine Quellerscheinungen aufweisen, sind mit pigmentierten Systemen sehr viel schwieriger zu realisieren als mit unpigmentierten Systemen.

So werden z.B. die Oberflächeneigenschaften - insbesondere die Metallabriebeigenschaften - von Beschichtungen, die z.B. aus wasserverdünnbaren, säurehärtenden Melamin- und/oder Harnstoffharze als Bindemittel enthaltenden Lacken hergestellt worden sind, mit steigendem Pigmentgehalt, d.h. steigendem Deckvermögen, immer schlechter. Ein hohes Deckvermögen aufweisende Beschichtungen dieses Typs weisen deshalb nur dann eine gute Oberflächeneigenschaft auf, wenn sie mit einem schützenden Klarlack überzogen worden sind. Die Applikation einer zweiten schützenden Klarlackschicht bringt aber die Nachteile mit sich, daß zur Herstellung der Finish-Folien bzw. Endloskanten ein zusätzlicher Arbeitsgang notwendig wird und daß der Folienhersteller eine im Vergleich zum Einschichtverfahren viel aufwendigere und damit teurere Lackvorratshaltung in Kauf nehmen muß. Außerdem haben Lacke auf Basis von säurehärtenden Melamin-und/oder Harnstoffharzen den Nachteil, daß sie während der Verarbeitung und danach verhältnismäßig viel Formaldehyd emittieren.

Der Pigmentgehalt ist je nach gewünschter Deckfähigkeit und je nach dem Pigment sehr unterschiedlich und kann zwischen 0,1 bis 50 Gew.-%, vorzugsweise zwischen 5 und 40 Gew.-%, ganz besonders bevorzugt zwischen 7 und 30 Gew.-%, bezogen auf das Gesamtgewicht der Lackkomponente (I) liegen.

Der jeweils optimale Pigmentgehalt kann vom Durchschnittsfachmann mit Hilfe von einfach durchzuführenden Routineuntersuchungen gefunden werden.

Als Pigmente können alle anorganischen und organischen Pigmente eingesetzt werden, die sowohl wasserbenetzbar als auch bei den angewandten Temperaturen nicht sublimierbar sind und die sich unter den Verfahrens- und pH-Bedingungen nicht im Farbton verändern.

Beispiele für geeignete Pigmente sind Titandioxid des Rutiltyps, gelbe, rote und schwarze Eisenoxide, Ruß und Phthalocyanine. Bevorzugt wird Titandioxid als Pigment eingesetzt.

Ein besonders großer Vorteil der erfindungsgemäßen Lacksysteme liegt darin, daß sie mit einer für eine hohe Deckfähigkeit notwendigen Menge an Pigmenten pigmentiert werden können und dennoch auch nach Anwendung von verschärften Preßbedingungen noch Oberflächen mit so guten Eigenschaften liefern, daß die Applikation eines schützenden Klarlacks nicht notwendig ist.

So zeigen die mit den erfindungsgemäßen Lacksystemen hergestellten Oberflächen Metallabriebeigenschaften und Kratzfestigkeitswerte, die sonst nur mit zweischichtig applizierten Systemen (pigmentierter Basislack, schützender Klarlack) erreicht werden können. Die Metallabriebeigenschaften können leicht mit Hilfe des sogenannten "Ringtestes" ermittelt werden. Dabei wird mit einem z.B. aus Weißgold bestehenden Fingerring mehrfach über die zu testende Oberfläche geschabt. Wenn danach eine Markierung sichtbar bleibt, die durch leichtes Wischen mit einem Tuch nicht wieder entfernbar ist, dann liegen schlechte Metallabriebeigenschaften vor.

Die erfindungsgemäßen Lacksysteme führen zu Oberflächen mit guten Metallabriebeigenschaften und Kratzfestigkeitswerten.

Folien- und Möbelhersteller sind bestrebt, Finish-Folien mit höherer Oberflächengüte, bevorzugt im Küchenmöbelbereich einzusetzen, wo bisher Schichtstoffplatten (Laminate) verwendet wurden. Nachteilig wirkt sich bei diesen die kunststoffähnliche Oberfläche und die Verschmutzung durch Fingerprints aus. Schichtstoffplatten können auch nicht von der Rolle verarbeitet werden.
Mit den erfindungsgemäßen Folienlacken werden die Folien-und Möbelhersteller in die Lage versetzt, hochresistente Finishfolien herzustellen und für die gewünschten Möbelbereiche einzusetzen.

Durch die erfindungsgemäßen Lacke bleibt die Formaldehydemission während der Applikation und der Trocknung begrenzt. Die Formaldehydabgabe einer auf einer E1-Spanplatte verleimten Folie sollte im Verbund die Emissionsklasse E1 (≦ 0,1 ppm) nicht verschlechtern. Durch die Mitverwendung von Polyolen stehen Kondensationsharz-arme Folienlacke zur Verfügung. Üblicherweise für Kombinationen von Dispersionen mit z.B. Melaminharzen Mischungsverhältnisse von 90 : 1 bis 70 : 30, fest auf fest gerechnet, empfohlen. Durch die anteilige Zugabe von Polyolen steigt der Lackfestkörper an, und der Kondensationsharzanteil, der für die Formaldehyd-Emission maßgebend ist, nimmt ab.

Die Festkörperanteile der erfindungsgemäßen Lacke liegen, wie auch aus den nachfolgenden Beispielen hervorgeht, zwischen 50 und 60 %. Gleichzeitig werden auch die Erfordernisse der DIN 68 861 Gruppe A und die auf dem amerikanischen und skandinavischen Markt üblichen verschärften Erfordernisse erfüllt.

Nachfolgend wird die Erfindung anhand von Ausführungsbeispielen näher erläutert:

### Beispiele für die Komponente (I)

### Alle Mengenangaben beziehen sich auf 100 Teile der Komponente (I).

### (I)-1

38,5 Gew.-% einer selbstvernetzenden Methylolamidgruppen enthaltenden Acrylatdispersion mit einem Festkörper von 40 Gew.-%, einem mittleren Teilchendurchmesser von 0,1 µm, einem pH-Wert größer 7 und einer Viskosität kleiner 1000 mPas werden mit 37 Gew.-% einer Methylolamidgruppen enthaltenden selbstvernetzenden Acrylatdispersion mit einem Festkörper von 50 Gew.-%, einem mittleren Teilchendurchmesser von 0,2 µm, einer Viskosität von unter 500 mPas und einem pH-Wert von 2-4 gemischt. Zu dieser Mischung werden 5 Gew.-% einer 35 %igen Polyethylenwachsdispersion, 1 Gew.-% Siliciumdioxid als Mattierungsmittel, 0,8 Gew.-% eines mineralölenthaltenden Entschäumers, 1,2 Gew.-% Filmbildehilfsmittel auf Basis eines Phosphorsäureesterderivates in Kombination mit Propandiol, 16,5 Gew.-% eines Hexamethoxymethylmelaminharzes und 1 Gew.-% Dimethylethanolamin gegeben.

### (I)-2

8,5 Gew.-% eines Hexamethoxymethylmelaminharzes werden vorgelegt, und unter Rühren 0,5 Gew.-% eines Thixotropierungsmittels auf Basis eines Polyacrylats, 4 Gew.-% einer 35 %igen Polyethylenwachsdispersion, 1 Gew.-% Siliciumdioxid als Mattierungsmittel, 1,2 Gew.-% Filmbildehilfsmittel auf Basis eines Phophorsäurederivats in Kombination mit Propandiol, 0,6 Gew.-% eines mineralölenthaltenden Entschäumers, 83,7 Gew.-% einer selbstvernetzenden Methylolamidgruppen enthaltenden Acrylatdispersion mit einem Festkörper von 40 Gew.-%, einem mittleren Teilchendurchmesser von 0,1 µm, einem pH-Wert größer 7, einer Viskosität kleiner 1000 mPas und 0,5 Gew.-% Aminomethylpropandiol-1,3 hinzugefügt.

### (I)-3

8 Gew.-% eines Hexamethoxymethylmelaminharzes werden vorgelegt, und unter Rühren wie unter (1)-2 beschrieben 0,5 Gew.-% Thixotropierungsmittel, 4 Gew.-% Wachsdispersion, 1 Gew.-% Mattierungsmittel, 1,2 Gew.-% Filmbildehilfsmittel, 10 Gew.-% eines eth- und propoxylierten Derivates von Trimethylolpropan, 0,6 Gew.-% Entschäumer, 73,8 Gew.-% selbstvernetzende Acrylatdispersion, 0,5 Gew.-% Aminomethylpropanol und 0,4 Gew.-% eines Polysiloxanderivates hinzugefügt.

### (I)-4

7,3 Gew.-% eines Hexamethoxymethylmelaminharzes werden mit 1 Gew.-% Mattierungsmittel, 1,2 Gew.-% Filmbildehilfsmittel, 18 Gew.-% Trimethylolpropan, 0,5 Gew.-% Thixotropierungs mittel, 4 Gew.-% Wachsdispersion, 0,6 Gew.-% Entschäumerlösung, 66,5 Gew.-% einer wie unter (1)-2 beschriebenen selbstvernetzenden Acrylatdispersion, 0,5 Gew.-% Aminomethylpropanol und 0,4 Gew.-% eines wasserverdünnbaren Polysiloxans gemischt.

### (I)-5

Dieser Ansatz erfolgt wie unter (1)-4 beschrieben, wobei 9 Gew.-% Trimethylolpropan durch 9 Gew.-% eines plastifizierten Harnstoffharzes ersetzt werden.

### (I)-6

6,5 Gew.-% eines Hexamethoxymethylmelaminharzes werden mit 0,5 Gew.-% eines Polyacrylatverdikkers, 3,3 Gew.-% einer Polyethylenwachsdispersion, 1 Gew.-% Siliciumdioxid als Mattierungsmittel, 1 Gew.-% Filmbildehilfsmittel auf Basis eines Phophorsäureesters und 1,3-Propandiol, 8,3 Gew.-% Trimethylolpropan, 16,5 Gew.-% Harnstoffharz, 0,6 Gew.-% eines mineralölenthaltenden Entschäumers, 61,5 Gew.-% einer wie unter (1)-2 beschriebenen selbstvernetzenden Acrylatdispersion, 0,5 Gew.-% Dimethylethanolamin und 0,3 Gew.-% eines Polysiloxans gemischt.

### (I)-7

78,1 Gew.-% einer selbstvernetzenden Methylolamidgruppen enthaltenden Acrylatdispersion mit einem Festkörper von 40 Gew.-%, einem mittleren Teilchendurchmesser von 0,1 µm, einem pH-Wert größer 7 und einer Viskosität kleiner 1000 mPas werden mit 0,25 Gew.-% eines Acrylatverdickers, 13,5 Gew.-% eines wasserverdünnbaren bzw. emulgierbaren Hexamethoxymethylmelaminharzes, 4,6 Gew.-% einer wäßrigen Polyethylenwachsdispersion, 1 Gew.-% Mattierungsmittel, 1,2 Gew.-% Filmbildehilfsmittel, 0,6 Gew.-% eines Entschäumers und 0,5 Gew.-% Aminomethylpropanol unter Rühren gemischt.

### (I)-8

12 Gew.-% eines Hexamethoxymethylmelaminharzes werden mit 0,25 Gew.-% eines Acrylatverdickers, 4,5 Gew.-% einer Polyethylenwachsdispersion, 1 Gew.-% Mattierungsmittel, 1,2 Gew-% Filmbildehilfsmittel, 9 Gew.-% eines eth-propoxylierten Trimethylolpropanderivates, 0,6 Gew.-% eines Entschäumers, 70,4 Gew.-% einer wie unter (1)-7 beschriebenen Acrylatdispersion, 0,5 Gew.-% Aminomethylpropanol und 0,4 Gew.-% eines Polysiloxanderivates unter Rühren gemischt.

### (I)-9

11 Gew.-% eines Hexamethoxymethylmelaminharzes werden mit 64 Gew.-% einer Acrylatdispersion wie unter (1)-7 beschrieben, den üblichen Additiven, 9 Gew.-% eines plastifizierten Harnstoffharzes und 8 Gew.-% Trimethylolpropan unter Rühren gemischt.

### (I)-10

10 Gew.-% eines Hexamethoxymethylmelaminharzes werden mit 59 Gew.-% einer selbstvernetzenden Dispersion, 16 Gew.-% eines plastifizierten Harnstoffharzes, 7 Gew.-% Trimethylolpropan und den wie vorgehend beschriebenen Additiven unter Rühren gemischt.

Die Komponente (II) besteht aus einer wäßrigen Lösung einer Säure. Bevorzugt werden 50 Gew.-% PTS mit 50 Gew.-% Wasser vorverdünnt. (PTS = para-Toluolsulfonsäure).

In der nachfolgenden Tabelle sind einige Daten der erfindungsgemäßen Lacke zusammengestellt.

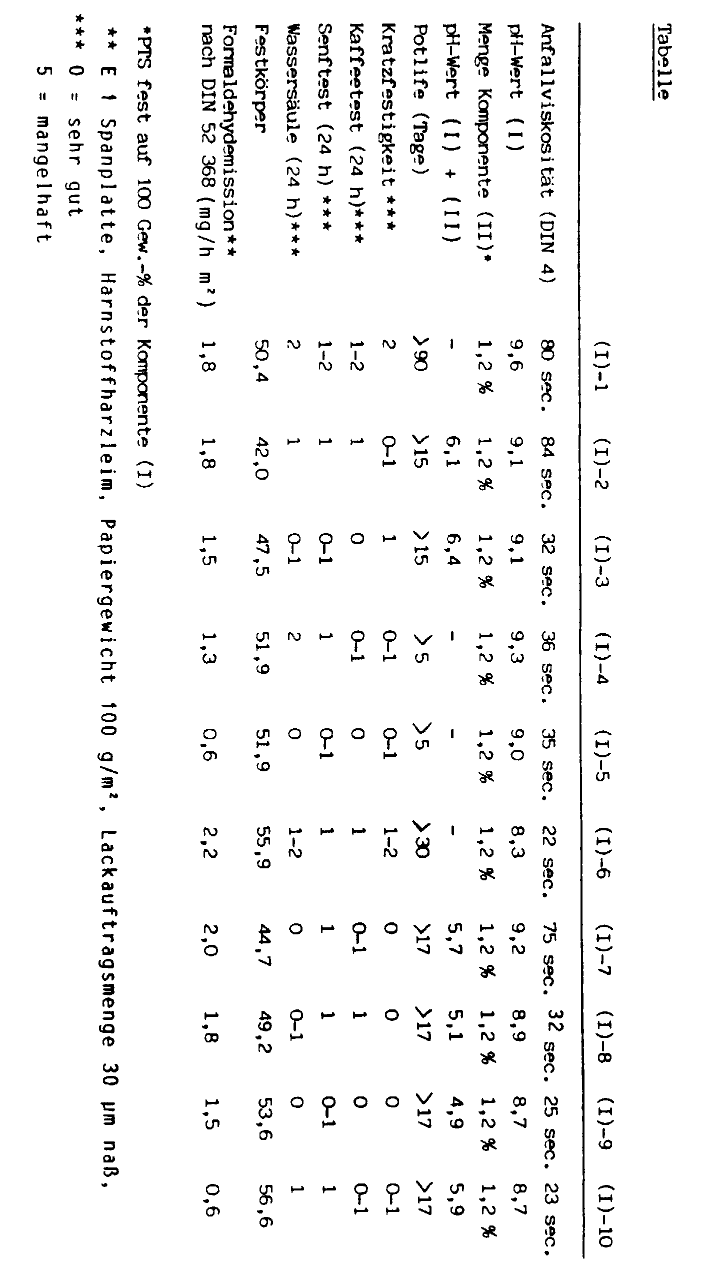

## Patentansprüche

1. Wäßrige, übliche Additive und ggf. Pigmente enthaltende Zweikomponentenlacke zur einschichtigen Beschichtung von Finish-Folien und Endloskanten, dadurch gekennzeichnet, daß die Lacke als Lackkomponente (I)
A) 40 bis 85 Gew.-%, vorzugsweise 60 bis 85 Gew.-%, einer wäßrigen Dispersion eines selbstvernetzenden Polyacrylatharzes, wobei dieses als die die Selbstvernetzung ermöglichenden Gruppen Säureamidderivatgruppen enthält, die der allgemeinen Strukturformel -CO-N(R¹)-CH(R²)-OR³ entsprechen, wobei
R¹ = H-Atom oder eine -CH(R²)-OR³-Gruppierung,
R² = H-Atom oder eine -COOR⁴-Gruppe,
R³ = H-Atom oder ein 1 bis 10 C-Atome enthaltender Kohlenwasserstoffrest, bevorzugt Methyl-, Ethyl-, (iso-)Propyl- oder (iso-)Butylrest,
R⁴ = Alkylrest mit 1 bis 5 C-Atomen,
B) 5 bis 50 Gew.-%, vorzugsweise 7 bis 20 Gew.-%, eines in einem wäßrigen Medium dispergierten oder gelösten Melaminharzes,
C) 0 bis 40 Gew.-%, vorzugsweise 5 bis 20 Gew.-%, eines in einem wäßrigen Medium dispergierten oder gelösten Harnstoffharzes,
D) 5 bis 30 Gew.-%, vorzugsweise 6 bis 15 Gew.-%, einer tri- oder höherfunktionellen Polyolkomponente sowie
E) 0,01 bis 5 Gew.-%, vorzugsweise 0,1 bis 1,5 Gew.-%, einer Aminkomponente
enthalten, die Lackkomponente (I) einen pH-Wert von über 7 aufweist, die Summe von A) bis E) 100 Gew.-% beträgt, auf ein Gewichtsteil selbst vernetzendes Polyacrylatharz (A) 0,1 bis 0,7 Gewichtsteile des Melaminharzes (B), 0 bis 0,7 Gewichtsteile des Harnstoffharzes (C) und 0,01 bis 0,7 Gewichtsteile der Polyolkomponente (D) kommen, die Härterkomponente (II) aus einer wasserverdünnbaren Säure besteht und die Komponenten (I) und (II) vor der Applikation in einem solchen Verhältnis gemischt werden, daß auf 100 Gewichtsteile der Lackkomponente (I) 0,05 bis 3 Gewichtsteile, vorzugsweise 0,5 bis 2 Gewichtsteile, der reinen Härterkomponente (II) kommen.

2. Verfahren zur einschichtigen Beschichtung von Finish-Folien und Endloskanten, bei dem die Finish-Folien bzw. Endloskanten mit einem wäßrigen, übliche Additive und ggf. Pigmente enthaltenden Zweikomponentenlack beschichtet werden und der Naßfilm anschließend 10 bis 60, vorzugsweise 10 bis 20 Sekunden lang bei 140 bis 210 °C ausgehärtet wird, dadurch gekennzeichnet, daß die Lackkomponente (I)
A) 40 bis 85 Gew.-%, vorzugsweise 60 bis 85 Gew.-%, einer wäßrigen Dispersion eines selbstvernetzenden Polyacrylatharzes, wobei dieses als die die Selbstvernetzung ermöglichenden Gruppen Säureamidderivatgruppen enthält, die der allgemeinen Strukturformel -CO-N(R¹)-CH(R²)-OR³ entsprechen, wobei
R¹ = H-Atom oder eine -CH(R²)-OR³-Gruppierung,
R² = H-Atom oder eine -COOR⁴-Gruppe,
R³ = H-Atom oder ein 1 bis 10 C-Atome enthaltender Kohlenwasserstoffrest, bevorzugt Methyl-, Ethyl-, (iso-)Propyl- oder (iso-)Butylrest,
R⁴ = Alkylrest mit 1 bis 5 C-Atomen,
B) 5 bis 50 Gew.-%, vorzugsweise 7 bis 20 Gew.-%, eines in einem wäßrigen Medium dispergierten oder gelösten Melaminharzes,
C) 0 bis 40 Gew.-%, vorzugsweise 5 bis 20 Gew.-%, eines in einem wäßrigen Medium dispergierten oder gelösten Harnstoffharzes,
D) 5 bis 30 Gew.-%, vorzugsweise 6 bis 15 Gew.-%, einer tri- oder höherfunktionellen Polyolkomponente sowie
E) 0,01 bis 5 Gew.-%, vorzugsweise 0,1 bis 1,5 Gew.-%, einer Aminkomponente
enthält, die Lackkomponente (I) einen pH-Wert von über 7 aufweist, die Summe von A) bis E) 100 Gew.-% beträgt, auf ein Gewichtsteil selbst vernetzendes des Polyacrylatharz (A) 0,1 bis 0,7 Gewichtsteile des Melaminharzes (B), 0 bis 0,7 Gewichtsteile des Harnstoffharzes (C) und 0,01 bis 0,7 Gewichtsteile der Polyolkomponente (D) kommen, die Härterkomponente (II) aus einer wasserverdünnbaren Säure besteht und die Komponenten (I) und (II) vor der Applikation in einem solchen Verhältnis gemischt werden, daß auf 100 Gewichtsteile der Lackkomponente (I) 0,05 bis 3 Gewichtsteile, vorzugsweise 0,5 bis 2 Gewichtsteile, der reinen Härterkomponente (II) kommen.

3. Lacke oder Verfahren nach Anspruch 1 oder 2, dadurch gekennzeichnet, daß als Aminkomponente (E) 2-Amino-2-ethylpropandiol-1,3 und/oder 2-Amino-2-methylpropanol verwendet werden.

4. Lacke oder Verfahren nach Anspruch 1 bis 3, dadurch gekennzeichnet, daß als wasserverdünnbare Säure para-Toluolsulfonsäure eingesetzt wird.

5. Verwendung der Lacke nach einem der Ansprüche 1, 3 oder 4 zur Beschichtung von Finish-Folien und Endloskanten.

## Claims

1. An aqueous, two-component paint containing customary additives and, if appropriate, pigments, for one-coat coating of finishing sheeting and continuous edging, which contains as paint component (I)
A) 40 to 85% by weight, preferably 60 to 85% by weight, of an aqueous dispersion of a self-crosslinking poly acrylate resin which contains as the groups capable of bringing about the self-crosslinking acid amide derivative groups corresponding to the general structural formula -CO-N(R¹)-CH(R²)-OR³, wherein
R¹ = a hydrogen atom or a -CH(R²)-OR³ group,
R² = a hydrogen atom or a -COOR⁴ group,
R³ = a hydrogen atom or a hydrocarbon radical of 1 to 10 carbon atoms, preferably the methyl, ethyl, (iso)propyl or (iso)butyl radical,
R⁴ = an alkyl radical of 1 to 5 carbon atoms;
B) 5 to 50% by weight, preferably 7 to 20% by weight, of a melamine resin dispersed or dissolved in an aqueous medium;
C) 0 to 40% by weight, preferably 5 to 20% by weight, of a urea resin dispersed or dissolved in an aqueous medium;
D) 5 to 30% by weight, preferably 6 to 15% by weight, of a trihydric or more highly polyhydric polyol component; and
E) 0.01 to 5% by weight, preferably 0.1 to 1.5% by weight, of an amine component,
the paint component (I) has a pH of more than 7, A) to E) add up to 100% by weight, 0.1 to 0.7 part by weight of the melamine resin (B) 0 to 0.7 part by weight of the urea resin (C) and 0.01 to 0.7 part by weight of the polyol component (D) are present per one part by weight of self-crosslinking polyacrylate resin (A), the curing component (II) consists of a water-dilutable acid and the components (I) and (II) are mixed prior to application in a ratio of 0.05 to 3 parts by weight, preferably 0.5 to 2 parts by weight, of the pure curing component (II) to 100 parts by weight of the paint component (I).

2. A process for one-coat coating of finishing sheeting and continuous edging, wherein the finishing sheeting and continuous edging are coated with an aqueous two-component paint containing customary additives and, if appropriate, pigments, and wherein the wet film is subsequently cured for 10 to 60, preferably 10 to 20 seconds at 140 to 210°C, wherein the paint component (I) contains
A) 40 to 85% by weight, preferably 60 to 85% by weight, of an aqueous dispersion of a self-crosslinking polyacrylate resin which contains as the groups capable of bringing about the self-crosslinking acid amide derivative groups corresponding to the general structural formula -CO-N(R¹)-CH(R²)-OR³, wherein
R¹ = a hydrogen atom or a -CH(R²)-OR³ group,
R² = a hydrogen atom or a -COOR⁴ group,
R³ = a hydrogen atom or a hydrocarbon radical of 1 to 10 carbon atoms, preferably the methyl, ethyl, (iso)propyl or (iso)butyl radical,
R⁴ = an alkyl radical of 1 to 5 carbon atoms;
B) 5 to 50% by weight, preferably 7 to 20% by weight, of a melamine resin dispersed or dissolved in an aqueous medium;
C) 0 to 40% by weight, preferably 5 to 20% by weight, of a urea resin dispersed or dissolved in an aqueous medium;
D) 5 to 30% by weight, preferably 6 to 15% by weight, of a trihydric or more highly polyhydric polyol component; and
E) 0.01 to 5% by weight, preferably 0.1 to 1.5% by weight, of an amine component,
the paint component (I) has a pH of more than 7, A) to E) add up to 100% by weight, 0.1 to 0.7 part by weight of the melamine resin (B) 0 to 0.7 part by weight of the urea resin (C) and 0.01 to 0.7 part by weight of the polyol component (D) are present per one part by weight of self-crosslinking polyacrylate resin (A), the curing component (II) consists of a water-dilutable acid and the components (I) and (II) are mixed prior to application in a ratio of 0.05 to 3 parts by weight, preferably 0.5 to 2 parts by weight, of the pure curing component (II) to 100 parts by weight of the paint component (I).

3. Paints or processes as claimed in claims 1 or 2, wherein 2-amino-2-ethyl-1,3-propanediol and/or 2-amino-2-methylpropanol are used as the amine component (E).

4. Paints or processes as claimed in claims 1 to 3, wherein p-toluenesulfonic acid is used as water-dilutable acid.

5. Use of the paints as claimed in claims 1, 3 or 4, for coating finishing sheeting and continuous edging.

## Revendications

1. Laques aqueuses, à deux composants, renfermant des additifs usuels et, le cas échéant, des pigments, pour le revêtement en une seule couche de feuilles de finition et de bords continus, caractérisées par le fait que les laques contiennent, comme composant de laque (I)
A) 40 à 85% en poids, de préférence, 60 à 85% en poids, d'une dispersion aqueuse d'une résine de polyacrylate autoréticulante, celle-ci contenant, comme groupes permettant l'autoréticulation, des groupes de dérivé d'amide d'acide qui correspondent à la formule structurale générale:
-CO-N(R¹)-CH(R²)-OR³,
où:
- R¹ = atome d'hydrogène ou un groupement CH(R²)-OR³;
- R² = atome d'hydrogène ou un groupe -COOR⁴;
- R³ = atome d'hydrogène ou un reste hydrocarboné contenant 1 à 10 atomes de carbone, de préférence un reste méthyle, éthyle, (iso)propyle ou (iso)butyle;
- R⁴ = reste alkyle ayant 1 à 5 atomes de carbone,
B) 5 à 50% en poids, de préférence, 7 à 20% en poids, d'une résine de mélamine dispersée ou dissoute dans un milieu aqueux,
C) 0 à 40% en poids, de préférence, 5 à 20% en poids, d'une résine d'urée dispersée ou dissoute dans un milieu aqueux,
D) 5 à 30% en poids, de préférence, 6 à 15% en poids, d'un composant polyol trifonctionnel ou à fonctionnalité supérieure, de même que
E) 0,01 à 5% en poids, de préférence, 0,1 à 1,5% en poids d'un composant amine,
le composant de laque (I) présente une valeur de pH supérieure à 7, la somme de A) à E) s'élève à 100% en poids, pour une partie en poids de résine de polyacrylate autoréticulante (A), il revient 0,1 à 0,7 partie en poids de la résine de mélamine (B), 0 à 0,7 partie en poids de la résine d'urée (C) et 0,01 à 0,7 partie en poids du composant polyol (D), le composant durcisseur (II) se compose d'un acide diluable dans l'eau, et les composants (I) et (Il) sont mélangés, avant l'application, dans un rapport tel que, pour 100 parties en poids du composant de laque (I), il revienne 0,05 à 3 parties en poids, de préférence, 0,5 à 2 parties en poids, du composant durcisseur pur (II).

2. Procédé pour le revêtement en une seule couche de feuilles de finition et de bords continus, suivant lequel les feuilles de finition ou les bords continus sont revêtus par une laque aqueuse, à deux composants, renfermant des additifs usuels et, le cas échéant, des pigments, puis le film humide est durci pendant 10 à 60, de préférence, 10 à 20 secondes, à une température de 140 à 210°C, caractérisé par le fait que le composant de laque (I) contient:
A) 40 à 85% en poids, de préférence, 60 à 85% en poids, d'une dispersion aqueuse d'une résine de polyacrylate autoréticulante, celle-ci contenant, comme groupes permettant l'autoréticulation, des groupes de dérivé d'amide d'acide qui correspondent à la formule structurale générale:
-CO-N(R¹)-CH(R²)-OR³,
où:
- R¹ = atome d'hydrogène ou un groupement CH(R²)-OR³;
- R² = atome d'hydrogène ou un groupe -COOR⁴;
- R³ = atome d'hydrogène ou un reste hydrocarboné contenant 1 à 10 atomes de carbone, de préférence un reste méthyle, éthyle, (iso)propyle ou (iso)butyle;
- R⁴ = reste alkyle ayant 1 à 5 atomes de carbone,
B) 5 à 50% en poids, de préférence, 7 à 20% en poids, d'une résine de mélamine dispersée ou dissoute dans un milieu aqueux,
C) 0 à 40% en poids, de préférence, 5 à 20% en poids, d'une résine d'urée dispersée ou dissoute dans un milieu aqueux,
D) 5 à 30% en poids, de préférence, 6 à 15% en poids, d'un composant polyol trifonctionnel ou à fonctionnalité supérieure, de même que
E) 0,01 à 5% en poids, de préférence, 0,1 à 1,5% en poids d'un composant amine,
le composant de laque (I) présente une valeur de pH supérieure à 7, la somme de A) à E) s'élève à 100% en poids, le composant durcisseur (II) se compose d'un acide diluable dans l'eau, pour une partie en poids de résine de polyacrylate autoréticulante (A), il revient 0,1 à 0,7 partie en poids de la résine de mélamine (B), 0 à 0,7 partie en poids de la résine d'urée (C) et 0,01 à 0,7 partie en poids du composant polyol (D), et les composants (I) et (Il) sont mélangés, avant l'application, dans un raport tel que, pour 100 parties en poids du composant de laque (I), il revienne 0,05 à 3 parties en poids, de préférence, 0,5 à 2 parties en poids, du composant durcisseur pur (II).

3. Laques ou procédé selon la revendication 1 ou 2, caractérisé(es) par le fait que, comme composant amine (E) sont utilisés l'amino-2 éthyl-2 propanediol-1,3 et/ou l'amino-2 méthyl-2 propanol.

4. Laques ou procédé selon l'une des revendications 1 à 4, caractérisé(es) par le fait que, comme acide diluable dans l'eau, est utilisé l'acide paratoluènesulfonique.

5. Utilisation des laques selon l'une des revendications 1, 3 ou 4 pour le revêtement de feuilles de finition et de bords continus.
